(19) **Europäisches Patentamt / European Patent Office / Office européen des brevets**

(11) **EP 1 761 132 B1**

(12) **EUROPEAN PATENT SPECIFICATION**

(45) Date of publication and mention
of the grant of the patent:
**23.11.2011 Bulletin 2011/47**

(21) Application number: **04743169.7**

(22) Date of filing: **30.06.2004**

(51) Int Cl.:
***A23G 4/00*** (2006.01)

(86) International application number:
**PCT/GB2004/002821**

(87) International publication number:
**WO 2006/003349 (12.01.2006 Gazette 2006/02)**

(54) **CHEWING GUM COMPRISING FLAVOR EMULSION**

KAUGUMMI MIT AROMASTOFFEMULSION

GOMME A MACHER CONTENANT UNE EMULSION AROMATISANTE

(84) Designated Contracting States:
**AT BE BG CH CY CZ DE DK EE ES FI FR GB GR HU IE IT LI LU MC NL PL PT RO SE SI SK TR**

(43) Date of publication of application:
**14.03.2007 Bulletin 2007/11**

(73) Proprietor: **Cadbury Holdings Limited Uxbridge, Middlesex UB8 1DH (GB)**

(72) Inventors:
• **WITTORFF, Helle**
 **DK-7120 Vejle Øst (DK)**

• **JENSEN, Erik**
 **DK-8310 Tranbjerg J (DK)**

(74) Representative: **Olesen, Kaj et al Patentgruppen A/S Arosgaarden Aaboulevarden 31 8000 Aarhus C (DK)**

(56) References cited:
 **WO-A-90/04926      WO-A-99/09840**
 **WO-A1-92/22217      WO-A2-89/11212**
 **US-A1- 2002 051 836      US-A1- 2003 124 064**
 **US-B1- 6 444 241**

**Description**

**FIELD OF THE INVENTION**

The present invention relates to chewing gum according to claim 1.

**BACKGROUND OF THE INVENTION**

Conventionally a chewing gum composition includes gum base, sweeteners, flavors and further ingredients, e.g. softeners, colors, etc. The gum base is typically regarded as comprising the water insoluble part of the chewing gum as the gum base usually includes elastomeric and resinous compounds.

It is a problem related to chewing gum to obtain acceptable release of ingredients, particularly flavor.

One problem relates to the fact that gum bases are typically mostly lipophilic and they therefore tend to bind lipophilic substances such as lipophilic active agents and liposoluble flavors.

Different solutions have been suggested within the art, e.g. EP1241949 discloses a solution involving a hydrophilic gum base in order to avoid, that lipophilic active agents binds to the gum base during chewing.

One problem regarding flavored chewing gum is that it typically looses taste too quickly, and hence it is an important issue to provide a longer lasting flavor perception for the consumer. Thus efforts have been made to provide chewing gum with improved flavor release properties.

Some documents disclose that emulsifiers may provide beneficial effects on release characteristics of active ingredients, flavors, etc.

US 6,444,241 discloses a method of producing a chewing gum product containing caffeine or a caffeine salt compound comprising the steps of forming a chewing gum pellet and applying a coating to the gum pellet

WO 99/09840 discloses coating syrup for use in forming a coating on a comestible, wherein the coating syrup comprises a flavor emulsion.

US 2003/124064 discloses a stain removing chewing gum composition comprising a core and an optional coating. The composition comprises a stain removing agent being present in a manner which enables an effective amount of the stain removing agent to be released from the composition.

US 2002/051836 discloses a method of producing a chewing gum product containing a physically-modified N-substituted derivative of aspartame in order to control the release rate of the N-substituted derivative of aspartame.

WO 92/22217 discloses a chewing gum product having a rolling compound thereon, the rolling compound comprising palatinose, palatinose oligosaccharide or mixture thereof.

EP0407498 discloses the addition of emulsifiers in chewing gum as a way to obtain a prolonged flavor yield and EP0252000B1 discloses a chewing gum composition, which comprises certain types of emulsifiers thereby obtaining a longer lasting flavor and sweetness. A problem of this disclosure is however that a large amount of the applied flavor is incorporated into the gum base and therefore never released.

It is an object of the invention to increase flavor release of a chewing gum.

A further object of the present invention is to provide a higher intensity in flavor perception of chewing gum for the consumer during chewing.

**SUMMARY OF THE INVENTION**

The invention relates to a chewing gum comprising a chewing gum base, and at least one emulsion system, which comprises at least one flavor, at least one dispersion medium and at least one emulsifier having a total HLB value of at least 10, wherein said at least one emulsifier comprises in the range of 0.1 to 10 percent by weight of said chewing gum.

According to the invention, an improved release of sweetness and flavor intensity of a chewing gum has been obtained when flavor is prepared in an emulsion, which is then mixed into the chewing gum.

In the present context said emulsion system comprising at least one flavor may sometimes simply be referred to as "flavor emulsion".

An emulsion system in general including dispersion medium, emulsified agent and emulsifier may simply be referred to as "emulsion".

The expression "dispersion medium" is used in the present context to describe the external phase also referred to as the continuous phase of an emulsion system according to the present invention.

HLB values (hydrophilic lipophilic balance) are in the present context reported as theoretical values or experimental values approximately correlated to fit the theoretical values, which may be calculated as:

$$HLB = 20 * Mwhydro / Mwtotal,$$

wherein Mwhydro is the molecular weight of the hydrophilic part of an emulsifier molecule and Mwtotal is the total molecular weight of the emulsifier molecule.

The calculation method implies that the highest possible HLB value is 20, and therefore in the present text a HLB value of 20 is regarded as the maximum HLB value obtainable for an emulsifier.

It is however noted that other calculation methods and measuring methods may estimate HLB values as being greater than 20.

The total HLB value of a blend of emulsifiers may in simple cases be estimated by using weighted average of the emulsifiers used in the blend. Both single emulsifiers and blends of emulsifiers may be referred to as "emulsifier".

In order to achieve the objective of the present invention the emulsion system preferably comprises emulsifiers having high HLB values, preferably at least a value of 10. Such emulsifiers have shown to provide the strongest and most advantageous influence on taste and texture parameters such as flavor, cooling, sweetness and softness. It has furthermore been observed that a higher concentration of emulsifier does also increase the beneficial effects of having a flavor emulsion incorporated in the chewing gum. Consequently an emulsifier of moderate HLB may reasonably be used if the percentage of emulsifier concentration is adequately high.

In an embodiment of the invention the flavors, which release better when applied through an emulsion system, preferably belong to the oil-based flavors. Such flavorings may be categorized as substantially liposoluble and they may preferably be natural oils comprising a variety of flavoring components in an oily medium.

In an embodiment of the invention, the at least one emulsifier has a total HLB value within the range of 10 to 20.

In an embodiment of the invention, said at least one emulsifier has a HLB value in the range of 12 to 20, preferably in the range of 14 to 20.

According to an embodiment of the invention a relatively high HLB value is generally preferred due to fact that the affinity to the gum base decreases and thereby increases the flavor release.

In an embodiment of the invention, said at least one emulsifier amounts to at most 10 % by weight, preferably at most 5 % by weight of said chewing gum.

In an embodiment of the invention, said at least one emulsifier amounts to at least 0.3 % by weight, preferably at least 0.5 % by weight, more preferably at least 0.7 % by weight of said chewing gum.

According to an embodiment of the invention, it is noted that an increased amount of emulsifier facilitates an increased and prolonged release of the flavor of the emulsion system.

In an embodiment of the invention, said at least one emulsifier amounts to at least 1.4 % by weight of said chewing gum.

In an embodiment of the invention, said at least one emulsifier comprises in the range of 0.1 to 5.0 % by weight, preferably 0.1 to 2.5 % by weight and most preferably 0.1 to 1.5 % by weight of said chewing gum.

In an embodiment of the invention, said at least one emulsifier comprises in the range of 1 to 90 % by weight, preferably 2 to 80 % by weight, more preferably 3 to 70 % by weight, even more preferably 4 to 60 % by weight, and most preferably 5 to 50 % by weight of the emulsion system.

In an embodiment of the invention, said emulsion system further comprises active agents.

According to an embodiment of the invention active agents may be incorporated in the emulsion. In this way, the release of flavor and active agents may be mutually synchronized, thereby facilitating an effective masking. Applicable active agents are listed in the detailed description.

In an embodiment of the invention, said at least one emulsifier is selected from the group of sucrose esters, polysorbates, polyglycerol esters, citric acid esters, sodium stearoyllactylate, sodium lauryl sulfate, polyoxyethylated hydrogenated castor oil, and polyoxyethylene steracic acid ester.

Evidently, according to an embodiment of the invention several different types of emulsifiers may be applied advantageously, as long as the HLB fulfills the overall requirements of the invention. Thus, it is expected that future emulsifiers having a HLB within the scope of the invention may be applied according the invention.

In an embodiment of the invention, said dispersion medium is selected from the group of water, ethanol, alkyl polyols, glycerol, sorbitol, and propylene glycol and combinations thereof.

In an embodiment of the invention the dispersion medium may be chosen from different types of medias such as certain types of alcohols. In a preferred embodiment of the invention, the dispersion medium comprises bounded water, such as alkyl polyols, thereby minimizing uncontrolled reactions between the dispersion medium and other chewing gum or coating ingredients.

In an embodiment of the invention, said chewing gum comprises dispersion medium in the range of 0.1 to 40 percent by weight, preferably in the range of 0.5 to 20 percent by weight, more preferably in the range of 1 to 15 percent by weight, even more preferably in the range of 1.5 to 10 percent by weight, and most preferably in the range of 2 to 8 percent by weight of the chewing gum.

Experiments have shown that a certain amount of dispersion medium in an embodiment of the invention may increase flavor, texture and sweetness.

The nature of the gum base applied may affect the optimal amount of dispersion medium in the chewing gum product,

In an embodiment of the invention, said dispersion medium comprises at most 20% by weight, preferably at most 15 % by weight, more preferably at most 10 % by weight, and most preferably at most 5 % by weight of the chewing gum.

In an embodiment of the invention, said dispersion medium comprises in the range of 10 - 90 % by weight, preferably in the range of 20 - 80 % by weight, more preferably in the range of 30 - 70 percent by weight, and most preferably in the range of 40 - 60 % by weight of the emulsion system.

In an embodiment of the invention, said dispersion medium contains water in a quantity of at least 0.5 percent by weight, preferably at least 2 percent by weight, more preferably at least 5 percent by weight and most preferably at least 10 percent by weight of the dispersion medium.

The presence of water in the chewing gum either added purely as water or as water content in the dispersion medium may have an increasing effect of sweetness perception. This may at least partly be explained by the water dissolving some of the bulk sweetener in the chewing gum, which may result in a more readily perception for the consumer compared to having to dissolve some of the bulk sweetener by saliva before experience of sweetness perception occurs.

In an embodiment of the invention, said dispersion medium is water in a quantity in the range of 0.1 to 10 percent by weight, preferably in the range of 0.5 to 8 percent by weight, and most preferably in the range of 1 to 6 percent by weight of the chewing gum.

It is noted that the content of water in chewing gum should preferably be kept low enough to result in a water activity in the chewing gum products below 75 RH at 25°C. Hereby unwanted growth of bacteria, germ and etc. may be avoided.

In an embodiment of the invention water may be used as the dispersion medium due to the very attractive properties obtained by this medium. According to a preferred embodiment of the invention a water-based flavor emulsion tends to improve both texture and flavor of the chewing gum

In an embodiment of the invention, said flavor comprises 0.01 to 10 % by weight, preferably 0.1 to 5 % by weight of said chewing gum.

It may in a preferred embodiment of the invention be appreciated that the quantity of flavor applied to obtain excellent flavor perception for the consumer may be reduced due to the action of the emulsion system, which has shown to increase the releasing of flavor from the chewing gum. Hereby it may be possible to lower the amount of added flavor, while maintaining similar effect.

In an embodiment of the invention, said emulsion system comprises at least one substantially oil-based flavor.

According to the invention it should be noted that several flavors, especially the synthetic flavors exhibits both hydrophobic and hydrophilic properties. However, it is noted that the use of high HLB emulsifiers is preferred in combination with flavors, which are substantially oil-based. However, it is furthermore noted that some flavors, which are typically regarded as hydrophilic, may also comprise oil-based components, which may benefit of the properties of the flavor emulsion.

In an embodiment of the invention, said flavor is selected from the group of peppermint, spearmint, strawberry, cherry, lemon, orange, wintergreen, anise, cola, cinnamon, banana, blackberry, blue berry, eucalyptus, menthol, and combinations thereof.

In an embodiment of the invention, said flavor is a natural or synthetic flavoring oil.

In an embodiment of the invention, said flavor is liposoluble.

In an embodiment of the invention some preferred flavors such as for example menthol may not by themselves be oil-based as they are powders, crystals, etc. However such preferred flavors may be soluble in oil. Hence they may in a preferred embodiment be dissolved in an oil-phase and afterwards be added as flavor components in emulsion systems and in this way added to chewing gum according to the present invention.

In an embodiment of the invention, said flavor comprises oil-based peppermint or spearmint flavor.

In an embodiment of the invention, said flavor is a fruit flavor.

In an embodiment of the invention oil-based and/or liposoluble fruit flavors are emulsified in an emulsion system as previously described according to the invention.

In a further embodiment of the invention hydrophilic fruit flavors, e.g. in powder form, are dissolved in water and by the influence of an emulsifier mixed with an oil-based liquid. Being added to chewing gum the emulsion may provide improved release of the hydrophilic fruit flavors.

In an embodiment of the invention, said flavor comprises in the range of 10 - 90 % by weight, preferably in the range of 20 - 80 % by weight, more preferably in the range of 30 - 70 percent by weight, and most preferably in the range of 40 - 60 % by weight of the emulsion system.

In an embodiment of the invention, said emulsion system comprises in the range of 1 to 20 %, preferably in the range of 1 to 10 % by weight of said chewing gum.

In an embodiment of the invention, said chewing gum comprises at least two different emulsion systems comprising different flavors.

In an embodiment of the invention it is preferred to apply more than one flavoring agent to the chewing gum. The at least two flavors may be mixed in the same emulsion system or in separate emulsion systems.

In an embodiment of the invention it may be an advantage to apply different emulsion systems in order to add different flavors separately to the chewing gum via such separate emulsion systems.

In an embodiment of the invention the nature of different flavors may require different emulsifiers, dispersion mediums, etc. and thus separate flavor emulsions are preferred.

In further an embodiment of the invention different emulsion systems of different flavors are mixed before addition to the chewing gum. Each emulsion system may contain either one single flavor or two or more flavors.

In an embodiment of the invention, said emulsion system comprises at least two flavors.

An advantage of adding to the chewing gum one single emulsion system containing two or several flavors may be simplicity in the manufacturing process.

Said emulsion system comprises dispersed droplets having diameters in the range of 0 to 10 um, preferably 0 to 5 $\mu$m, more preferably 0 to 3 $\mu$m, even more preferably 0 to 2 $\mu$m, and most preferably 0 to 1 $\mu$m.

According to an embodiment of the invention it may be preferred that the droplet size of the dispersed droplets is relatively small for the reason that small sized droplets may have a slighter affinity for the gum base than larger droplets. In other words a flavor emulsion of relatively small sized droplets may consequently show a higher stability than an emulsion of larger sized droplets.

In a preferred embodiment of the invention, the dispersed droplets of flavor in the flavor emulsion have diameters in the range of 1 to 3 $\mu$m.

In an embodiment of the invention, said emulsion system is stable for at least five hours, preferably at least one day, more preferably at least one week and most preferably at least several months.

Stability of the emulsion system may be considered both with respect to storage capability of the flavor emulsion itself and with respect to the stability of the flavor emulsion when applied in chewing gum.

In an embodiment of the invention it is for the sake of reduction in manufacturing costs preferred to be able to store the flavor emulsion for longer periods without agglomeration of the emulsified droplets of flavor.

In a further embodiment of the invention it is preferred that the emulsified droplets of flavor within the chewing gum product are stable both in storage and in use. In an embodiment of the invention stability of the emulsified droplets within the chewing gum is obtained to improve flavor release being the result of a mobilization of the flavor from the gum base. When applying oil-based flavor the droplets and/or colloids dispersed in the emulsion system may have a hydrophilic surface due to the emulsifier. Hence as the saliva of the consumer is also hydrophilic the emulsified droplets of oil-based flavor tend to migrate from the chewing gum and gum base to the saliva and oral cavity during chewing. Hereby release may be increased and be the reason for the superior flavor perception observed for chewing gum of the present invention.

In an embodiment of the invention, said emulsion system is stable when mixed into the chewing gum.

In an embodiment of the invention, said chewing gum comprises sweetener in an amount in range of 1 to 95% by weight of the chewing gum.

Bulk sweeteners may be added in a quantity of 5 - 95 percent by weight of the chewing gum, whereas high intensity sweeteners may be added in a smaller quantity of 0.01 to 5 percent by weight of the chewing gum.

In an embodiment of the invention, said chewing gum comprises at least one sweetener selected from the group of bulk sweeteners and high intensity sweeteners.

Sweeteners may provide an improved taste because flavoring in combination with sweetness may provide the experience of a very intense taste perception. In an embodiment of the invention the sweetness perception may be enhanced as a result of the flavor emulsion added to the chewing gum.

In an embodiment of the invention, said emulsion system comprises sweetener.

The sweetness perception may be even more enhanced if at least a part of the chewing gum sweetener is added through the emulsion system.

In an embodiment of the invention, said chewing gum comprises at least 25 percent by weight, preferably at least 35 percent by weight of gum base.

In an embodiment of the invention, said gum base comprises ingredients including at least one elastomer and at least one elastomer plasticizer.

In an embodiment of the invention, said gum base comprises at least one ingredient selected from the group of natural resins, synthetic resins, natural elastomers, synthetic elastomers, fats, waxes, emulsifiers, fillers, colors and antioxidants.

In an embodiment of the invention, said gum base comprises at least two components selected from the group of natural or synthetic elastomers, natural or synthetic resins, plasticizers, fats, waxes, emulsifiers, colors, antioxidants and fillers.

In an embodiment of the invention, said chewing gum is coated with an outer coating selected from the group of hard coatings, soft coatings and film coatings.

In an embodiment of the invention, said emulsion system is at least partly comprised in the coating of the chewing gum.

Emulsion added to the coating layer may provide an improved stability of the flavor. Moreover the emulsion prevents the flavor from migrating to the outer surface of coating and thereby avoiding unwanted reactions in and on the coating.

In an embodiment of the invention, said chewing gum comprises chewing gum ingredients including gum base, bulk sweeteners and flavors.

In an embodiment of the invention, said chewing gum comprises at least one chewing gum ingredient selected from the group of gum base, bulk sweeteners, flavoring agents, softeners, coloring agents, active ingredients, high intensity sweeteners, and fillers.

Furthermore, the invention relates to a method of manufacturing chewing gum according to any of the claims 1-41, whereby said emulsion system is mixed separately and added to the chewing gum during a procedure of mixing the chewing gum ingredients.

Furthermore, the invention relates to a method of manufacturing chewing gum according to any of the claims 1-40, whereby said emulsion system is mixed H separately and added to the coating.

## FIGURES

The invention will among other things be described with reference to the following figures, which illustrate evaluation results from a panel of taste judges considering perception of flavor, cooling and sweetness intensity of chewing gum products prepared according to embodiments of the present invention and chewing gum products prepared with comparative formulations. Evaluations are conducted consecutively during the chewing periods.

Fig. 1 displays in a diagram the flavor intensity of peppermint in chewing gum samples comprising emulsifiers having different HLB values. The emulsifier is incorporated in the chewing gum as a part of an emulsion system in accordance with the present invention.

Fig. 2 displays in a diagram the cooling intensity in chewing gum samples comprising emulsifiers having different HLB values. The emulsifier is incorporated in the chewing gum as a part of an emulsion system in accordance with the present invention.

Fig. 3 displays in a diagram the flavor intensity of peppermint in chewing gum samples comprising different concentrations of emulsifier. The emulsifier is incorporated in the chewing gum as a part of an emulsion system in accordance with the present invention.

Fig. 4 displays in a diagram the sweetness intensity in chewing gum samples comprising different concentrations of emulsifier. The emulsifier is incorporated in the chewing gum as a part of an emulsion system in accordance with the present invention.

Fig. 5 displays in a diagram the cooling intensity in chewing gum samples comprising different concentrations of emulsifier. The emulsifier is incorporated in the chewing gum as a part of an emulsion system in accordance with the present invention.

Fig. 6 displays in a diagram the peppermint intensity in chewing gum samples comprising premixed emulsion or premixed emulsifier and flavor only.

Fig. 7 displays in a diagram the cooling in chewing gum samples comprising premixed emulsion or premixed emulsifier and flavor only.

Interpretation of the legend numbers is specified in table 2, table 3 and table 4.

Chewing gum samples according to table 2, 3 and 4 were tested by serving them to 10 sensory panellists in tasting booths made in accordance with ISO 8598 standards at room temperature in small tasteless plastic cups with randomised 3-figure codes. For each of the parameters tested, the panellists were required to provide their assessments according to an arbitrary scale of 0-15. The scale (on vertical axis) used was as follows: 1 being the lowest rating and 15 being the highest rating.

Between each sample tested, the panellists were allowed a break of 3 minutes.

## DETAILED DESCRIPTION

Chewing gum of the present invention may comprise the conventional substantially water-soluble and water insoluble parts. The water insoluble parts are often referred to as the gum base. Description and examples of the components of these chewing gum parts are given below. However, chewing gum according to the present invention furthermore comprises at least one flavor emulsion system. A flavor emulsion according to the invention comprises a system of one or more flavors, emulsifiers and emulsion dispersion mediums.

The addition of such flavor emulsions containing emulsifiers having high HLB values has resulted in surprisingly improved flavor release. It is therefore believed by the inventors that the presence of emulsifiers of high HLB in chewing gum may make a substantial contribution to the release rate and release degree over time.

The theoretical explanation of this phenomenon is limited but it is believed by the inventors to involve the characteristic of emulsifiers being able to stabilize dispersed droplets in a liquid, in which the droplets are immiscible. In this way oil-in-water-emulsions (O/W-emulsions) may be formed from hydrophobic droplets being stabilized in a hydrophilic medium and water-in-oil-emulsions (W/O-emulsions) may be formed from hydrophilic droplets being stabilized in a hydrophobic medium. Without being bound to theory it is furthermore believed by the inventors that under certain circumstances it may be possible to make use of the emulsifier effects in order to mobilize oil-based flavor components from the water insoluble parts of the chewing gum, to which they tend to be bound and in which they therefore tend to stay even during chewing for a long time period. The appropriate conditions to establish this mobilization remain to be explained. It was however found that the use of an emulsion system as the carrier medium for flavor and emulsifier having HLB-valued above 10 resulted in a more intense flavor perception during chewing than is normally experienced in chewing gum with or without emulsifier and containing the same amount of flavor.

Compared to premix of flavor and emulsifier alone it was surprising that the flavor release properties of chewing gum were significantly improved when flavors were added as part of an emulsion system.

In an embodiment of the invention release of flavors from chewing gum is controlled by the emulsion system and adjusting hereof.

The flavor emulsion system according to the present invention may comprise the components listed below.

It is an object of the invention to control flavor release and to release a larger part of the flavors, which tend to be stuck in the water insoluble part of the chewing gum during chewing. The flavors under consideration are therefore particularly the oil-based and/or liposoluble flavors, which due to the emulsion system of the present invention may be destabilized from the chewing gum resulting both in an initially higher flavor release and a prolonged higher level of flavor release during a normal chewing period of about 10-20 minutes. Thus an initial high intensity of flavor perception is kept and may even be augmented. Even so the chewing gum does not loose all of its taste during the first few minutes, but a more steady level of flavor release than normally experienced in chewing gum may be achieved during the main part of the chewing period. Ultimately a significantly larger amount of the flavoring oil than conventionally observed may due to the emulsion system of the present invention be removed from the chewing gum during chewing. This implies an improved degree of utilization of the flavor added to the chewing gum. The appropriate amount of flavor addition may thereby be lowered, and a significantly cost saving product may in this way be obtained.

Flavouring agents well known in the chewing gum art are used in the emulsion system and chewing gum of the present invention. For preparation of the flavor emulsion these flavoring agents may be chosen from essential oils, synthetic oils and/or liquids, or natural oils, liquids and/or essences derived from plants, leaves, flowers, fruits and so forth, and combinations thereof.

Representative flavouring liquids include spearmint oil, cinnamon oil, oil of wintergreen (methylsalicylate) and peppermint oils. Also useful are artificial, natural, or synthetic fruit flavours such as citrus oil including lemon, orange, grape, lime and grapefruit and fruit essences including apple, strawberry, cherry, melon, banana, pineapple, blackberry, blueberry, cranberry, currants, and so forth.

Further examples of flavors, which according to the present invention may beneficially be added to chewing gum by use of an emulsion system comprise menthol, eucalyptus, clove oil, bay oil, anise, thyme, cedar leaf oil, nutmeg, liquorice, cola aroma, caramel aroma, honey aroma, peanut, walnut, cashew, hazelnut, almonds, raspberry, any tropical fruits, cherries, cinnamon, and mint.

In general all oil-based or liposoluble flavorings may be suitable for obtaining the described effects of the present invention .

Within the scope of the invention further flavorings may be added as supplements to the flavors comprised in the flavor emulsion. Such supplemental flavoring may for instance include chocolate, coffee, fruit acids, plum essence, extracts, freeze-dried natural vegetable components, fruit essences such as from apple, pear, peach, strawberry, apricot, raspberry, cherry, pineapple, coconut, essences, acids or powders containing flavor and any substance having a positive effect on the chewing gum taste.

Preferably the aroma agents and/or flavors may be used in an amount of from 0.01 to 30 percent by weight, preferably from 0.1 to 10 percent by weight of the chewing gum.

Emulsifiers are among other properties in general believed to be essential for the distribution of flavors and other ingredients in formulations such as chewing gum. With respect to chewing gum, emulsifiers have been mentioned as an important ingredient for distributing the expensive flavors resulting in formulations where the flavor to a higher degree is made available to the user.

One or more of the following examples of emulsifiers may be added to the chewing gum of the present invention. According to the invention the emulsifiers may preferably be added to the chewing gum by way of an emulsion system, which as above described comprises one or more flavors, one or more emulsifiers and one or more dispersion mediums.

The chewing gum according to the present invention may comprise one or more of the following emulsifiers also known as surfactants and/or solubilizers. As examples of types of surfactants to be used as solubilizers in a chewing gum according to the invention reference is made to H. P. Fiedler, Lexikon der Hilfstoffe fur Pharmacie, Kosmetik und Angrenzende Gebiete, pages 63-64 (1981) and the lists of approved food emulsifiers of the individual countries.

Both anionic, cationic, amphoteric, and nonionic emulsifiers may be used, but usually the emulsifier used is either anionic or nonionic as mainly such emulsifiers are approved for use in food or medicines.

Suitable emulsifiers, which are all known for use as food emulsifiers include lecithines, polyoxyethylene sorbitan fatty acid esters, ammonium phosphatides. (YN), fatty acid salts, mono- or diglycerides of fatty acids including distilled monoglycerides, acetic acid esters of mono- and diglycerides (Acetem), lactic acid esters of mono- and diglycerides of fatty acids (Lactem), citric acid esters of mono and diglycerides of fatty acids (Citrem), mono and diacetyl tartaric acid esters of mono and diglycerides of fatty acids (Datem), succinic acid esters of monoglycerides of fatty acids (SMG), ethoxylated monoglycerides, sucrose esters of fatty acids, sucroglycerides, polyglycerol esters of fatty acids, polyglycerol polyricinoleate, propane - 1,2 diol esters of fatty acids, thermally oxidized soya bean oil interacted with mono- or diglycerides of fatty acids, sodium stearoyl lactylate (SSL), calcium stearoyl lactylate (CSL), stearyl tartrate, sorbitan esters of fatty acids, polyglycerol esters of interesterified castor oil acid (E476), sodium stearoyllatylate, sodium lauryl sulfate and polyoxyethylene stearate such as for instance polyoxyethylene(8)stearate and polyoxyethylene(40)stearate.

Futher suitable emulsifiers for the present invention include polyoxyethylated hydrogenated castor oil (for instance, such sold under the trade name CREMO-PHOR), blockcopolymers of ethylene oxide and propylene oxide (for instance as sold under the trade name PLURONIC or the trade name POLOXAMER), polyoxyethylene fatty alcohol ethers, and polyoxyethylene steraric acid ester.

Examples of polyoxyethylene sorbitan fatty acid esters suitable as emulsifiers may comprise polyoxyethylen sorbitan monolaurate (polysorbate 20), polyoxyethylen sorbitan monooleate (polysorbate 80), polyoxyethylen sorbitan monopalmitate (polysorbate 40), polyoxyethylen sorbitan monostearate (polysorbate 60), polyoxyethylen sorbitan tristearate (polysorbate 65),

Examples of fatty acid salts suitable as emulsifiers may comprise fatty acid salts of sodium, potassium, calcium or magnesium.

Examples of sorbitan esters of fatty acids suitable as emulsifiers include sorbitan monostearate, sorbitan tristearate, sorbitan monolaurate, sorbitan monooleate, sorbitan monopalmitate, saccharose esters of fatty acids,

The emulsifier may either be a single compound or a combination of several compounds. The expression "emulsifier" is used in the present text to describe both possibilities. The emulsifier used should preferably be suitable for use in food and/or confectioneries.

Emulsifiers, which are used as softeners may include tallow, hydrogenated tallow, hydrogenated and partially hydrogenated vegetable oils, cocoa butter, glycerol monostearate, glycerol triacetate, lechithin, mono-, di-and triglycerides, acetylated monoglycerides, fatty acids (e.g. stearic, palmitic, oleic and linoleic acids), and combinations thereof.

Dispersion mediums, which are applicable according to the present invention include water, ethanol, sorbitol and polyhydric alcohols having two or more hydroxyl groups including glycerol and polyglycerols such as diglycerol, triglycerol, hexaglycerol and decaglycerol and further alkyl polyols such as glycerin and propylene glycol. Also glucose, sucrose, fructose and starch syrup may be applied as dispersion medium.

The water-insoluble gum base may generally comprise fats and oils, resins, elastomers, softeners, and inorganic fillers. The gum base may or may not include wax. The water-insoluble gum base may constitute approximately 5 to about 95 percent, by weight, of the chewing gum, more commonly the gum base comprises 10 to about 50 percent of the gum, and in some preferred embodiments, 20 to about 40 percent, by weight, of the chewing gum.

Synthetic elastomers may include not polyisobutylene with a gas pressure chromatography (GPC) average molecular weight of about 10,000 to about 1000000, isobutylene-isoprene copolymer (butyl elastomer), styrene-butadiene copolymers having styrene-butadiene ratios of about 1: 3 to about 3: 1, polyvinyl acetate (PVA) having a GPC average molecular weight of about 2,000 to about 90,000, polyisoprene, polyethylene, vinyl acetate-vinyl laurate copolymer having vinyl laurate content of about 5 to about 50 percent by weight of the copolymer, and combinations thereof.

Preferred combinations include polyisobutylene and styrene.

Any of the usual elastomers can be used in a quantity of typically 5-50 percent by weight of the gum base. The elastomer may be of natural origin, for instance such as stated in Food and Drug Administration, CFR, Title 21, Section 172,615, as "Masticatory Substances of Natural Vegetable Origin", or synthetic elastomers, such as styrene butadiene gum (SBR), butyl gum (isobutylene isoprene copolymer), or polyisobutylene (as stated in the above section of FDA under Masticatory Substances, Synthetic).

Resins should also be mentioned as a component forming part of a chewing gum base, said resins being used to obtain the right chewing consistency and as plasticizer for the elastomers of the chewing gum base. Typically the quantity of resin constitutes 20-80 percent by weight of the gum base.

Elastomers plasticizers may include, but are not limited to, natural rosin esters, often called estergums, such as glycerol esters of partially hydrogenated rosin, glycerol esters polymerized rosin, glycerol esters of partially dimerized rosin, glycerol esters of tall oil rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene, natural terpene resins; and any suitable combinations of the foregoing. The preferred elastomer plasticizers will also vary depending on the specific application, and on the type of elastomer which is used.

The fillers/texturizers that form part of the chewing gum base may include magnesium and calcium carbonate, sodium sulphate, ground limestone, silicate types such as magnesium and aluminium silicate, kaolin, clay, aluminium oxide, silicium oxide, talc, titanium oxide, mono-, di-and tri-calcium phosphates, cellulose polymers, such as wood, and combinations thereof. Filler is typically added in an amount, which constitutes in the range of 0 to 50 percent by weight of the gum base.

The fillers/texturizers may also include natural organic fibres such as fruit vegetable fibres, grain, rice, cellulose and combinations thereof.

As used herein the term softener designates an ingredient, which softens the gum base or chewing gum formulation and encompasses waxes, fats, oils, emulsifiers, surfactants, solubilisers etc.

To soften the gum base further and to provide it with water-binding properties, which confer to the gum base a pleasant smooth surface and reduce its adhesive properties, one or more emulsifiers is/are usually added to the gum base, typically in an amount of 0 to 18% by weight, preferably 0 to 12% by weight of the gum base. Mono- and diglycerides of edible fatty acids, lactic acid esters and acetic acid esters of mono-and diglycerides of edible fatty acids, acetylated mono and diglycerides, sugar esters of edible fatty acids, Na-, K-, Mg- and Ca-stearates, lecithin, hydroxylated lecithin and the like are examples of conventionally used emulsifiers, which can be added to the chewing gum base. In case of the presence of an active ingredient as defined below, the formulation may comprise certain specific emulsifiers and/or solubilisers in order to disperse and release the active ingredient.

Waxes, typically constituting 0 to 50 percent by weight of the gum base, may include synthetic waxes such as microcrystalline or paraffin waxes, or natural waxes such as carnauba, beeswax, candellila, or polyethylene wax.

Waxes and fats are conventionally used for the adjustment of the consistency and softening of the chewing gum base when preparing chewing gum bases. In connection with the present invention any conventionally used and suitable type of wax and fat may be used, such as for instance rice bran wax, polyethylene wax, petroleum wax (refined paraffin and micro crystalline wax), paraffin, beeswax, carnauba wax, candelilla wax, cocoa butter, degreased cocoa powder and any suitable oil or fat, as for instance completely or partially hydrogenated vegetable oils or completely or partially hydrogenated animal fats. In a preferred embodiment, the chewing gum is wax free. The wax of the general formulations may be replaced with hydrogenated oil or fat.

Suitable raw materials for the gum base further comprise substances according to U. S. Chewing Gum Base Regulations-Code of Federal Regulations, Title 21, Section 172.615.

In addition to a water insoluble gum base portion, a typical chewing gum includes a water soluble bulk portion and one or more flavouring agents as mentioned above. The water-soluble portion may include bulk sweeteners, high intensity sweeteners, flavouring agents, softeners, emulsifiers, colours, acidulants, fillers, antioxidants, and other components that provide desired attributes.

Bulk sweeteners include both sugar and sugarless components. Bulk sweeteners typically constitute 5 to about 95% by weight of the chewing gum, more typically constitute 20 to about 80% by weight, and more commonly, 30 to 60% by weight of the gum.

Sugar sweeteners generally include saccharide-containing components commonly known in the chewing gum art, but not limited to, sucrose, dextrose, maltose, saccharose, lactose, sorbose, dextrin, trehalose, D-tagatose, dried invert sugar, fructose, levulose, galactose, corn syrup solids, glucose syrup, hydrogenated glucose syrup, alone or in combination.

Sorbitol can be used as a sugarless sweetener. Additionally, sugarless sweeteners can include other sugar alcohols such as mannitol, xylitol, hydrogenated starch hydrolysates, maltitol, isomalt, erythritol, lactitol and the like, alone or in combination.

High intensity artificial sweeteners can also be used in combination with the above. Preferred high intensity sweeteners include sucralose, aspartame, salts of acesulfame, alitame, saccharin and its salts, cyclamic acid and its salts, cyclamate, glycyrrhizin, dihydrochalcones, thaumatin, monellin, sterioside , alone or in combination. In order to provide longer lasting sweetness and flavor perception, it may be desirable to encapsulate or otherwise control the release of at least a portion of the high intensity sweetener. Such techniques as wet granulation, wax granulation, spray drying, spray chilling, fluid bed coating, coascervation, encapsulation in yeast cells, fibre extrusion, or prilling may be used to achieve the desired release characteristics. The encapsulation can also be performed in another material such as resin.

Usage level of the high intensity sweetener will vary greatly and will depend on such factors as potency of the sweetener, rate of release, desired sweetness of the product, level and type of flavor used, and cost considerations. Thus, the quantity of high intensity sweetener may vary from 0.05 to 7%. When carriers used for encapsulation are included, the usage level of the encapsulated sweetener will be proportionally higher.

Combinations of sugar and/or sugarless sweeteners may be used in chewing gum.

If a low calorie gum is desired, a low caloric bulking agent can be used. Examples of low caloric bulking agents include polydextrose; Raftilose, Raftilin; Fructooligosaccharides (NutraFlora®); Palatinose oligosaccharide; Guar Gum Hydrolysate (SunFiber®); or indigestible dextrin (Fibersol). However, other low calorie-bulking agents can be used.

Chewing gum softeners, which are also known as plasticizers and plasticizing agents, generally constitute between about 1 to about 30 percent by weight of the chewing gum. The softeners may, in addition to including sucrose polyesters, include glycerin, lecithin, maltitolsyrup, and combinations thereof. Aqueous sweetener solutions such as those containing sorbitol, hydrogenated starch hydrolysates, corn syrup and combinations thereof, may also be used as softeners and binding agents in chewing gum.

The chewing gum may optionally contain further usual additives, such as binding agents, acidulants, fillers, coloring agents, preservatives, and antioxidants, for instance butylated hydroxytoluene (but), butyl hydroxyanisol (BHA), propylgallate and tocopherols.

Colorants and whiteners may include FD & C-type dyes and lakes, fruit and vegetable extracts, titanium dioxide, and combinations thereof.

Materials to be used for the above mentioned encapsulation methods might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

The chewing gum according to the present invention may also comprise active agents. Active agents to be used in connection with the present invention may be any substance desired to be released from the chewing gum. If an accelerated rate of release is desired, corresponding to the effect obtained for the flavor, the primary substances are those with limited water solubility, typically below 10 g/100 ml including substances which are entirely water insoluble. Examples are medicines, dietary supplements, oral compositions, anti-smoking agents, highly potent sweeteners, pH adjusting agents, etc.

Further examples of active ingedients include paracetamol, benzocaine, cinnarizine, menthol, carvone, coffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammoniumcompounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, folinic acid, niacine, biotine, poorly soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutrients acccepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth, are for instance bound hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcools (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminium salts, (for instance aluminium potassium sulfate AIK (S04) 2, 12H20) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium.

Cf. furthermore J. Dent. Res. Vol. 28 No. 2, page 160-171,1949, wherein a wide range of tested compounds are mentioned.

Examples of active agents in the form of agents adjusting the pH in the oral cavity include for instance: acceptable acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulfates or oxides of sodium, potassium, ammonium, magnesium or calcium, especially magnesium and calcium.

Examples of active agents in the form of anti-smoking agents include for instance: nicotine, tobacco powder or silver salts, for instance silver acetate, silver carbonate and silver nitrate.

Further examples of active agents are medicines of any type.

Examples of active agents in the form of medicines include coffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov. 85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen, Sildenafil citrate and derivatives thereof.

Dental products include Carbami, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminium fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B12, Folin acid, niacin, Pantothensyre, biotine, C, D, E, K.

Minerals include Calcium, phosphor, magnesium, iron, Zink, Cupper, Iod, Mangan, Crom, Selene, Molybden. Other active ingredients include:Q10®, enzymes. Natural drugs including Ginkgo Biloba, ginger, and fish oil. The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid.

In one embodiment of the invention, the increased flavor intensity may be used as taste masking in chewing gum comprising active ingredients, which by themselves has undesired taste or which alter the taste of the formulation.

The chewing gum according to the present invention may also be provided with an outer coating, which may be a hard coating, a soft coating, a film coating, or a coating of any type that is known in the art, or a combination of such coatings. The coating may typically constitute 0.1 to 75 percent by weight of a coated chewing gum piece.

One preferred outer coating type is a hard coating, which term is including sugar coatings and sugar-free (or sugarless) coatings and combinations thereof. The object of hard coating is to obtain a sweet, crunchy layer, which is appreciated by the consumer and to protect the gum centers. In a typical process of providing the chewing gum centers with a protective sugar coating the gum centers are successively treated in suitable coating equipment with aqueous solutions of crystallisable sugar such as sucrose or dextrose, which, depending on the stage of coating reached, may contain other functional ingredients, e.g. fillers, colors, etc.

In one presently preferred embodiment, the coating agent applied in a hard coating process is a sugarless coating agent, e.g. a polyol including as examples sorbitol, maltitol, mannitol, xylitol, erythritol, lactitol and isomalt or e.g. a mono- di-saccharide including as example trehalose.

Or alternatively a sugarfree soft coating e.g. comprising alternately applying to the centres a syrup of a polyol or a mono- di-saccharide, including as examples sorbitol, maltitol, mannitol, xylitol, erythritol, lactitol, isomalt and trehalose.

In further useful embodiments a film coating is provided by film-forming agents such as a cellulose derivative, a modified starch, a dextrin, gelatine, zein, shellec, gum arabic, a vegetable gum, a synthetic polymer, etc. or a combination thereof.

In an embodiment of the invention, the outer coating comprises at least one additive component selected from the group comprising a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid

A coated chewing gum center according to the invention may have any form, shape or dimension that permits the chewing gum center to be coated using any conventional coating process.

Typically the chewing gum centers of chewing gum according to the invention may be e.g. in a form selected from a pellet, a cushion-shaped pellet, a stick, a tablet, a chunk, a pastille, a pill, a ball and a sphere, and typically the weight of a gum center may be 0.1 to 10 grams, more commonly 0.5 to 5 grams.

The following examples are given for illustration, but not limitation of the invention.

## EXAMPLE 1

### Preparation of gum base

A gum base is prepared, which comprises the following ingredients.

| Ingredients | Percent by weight |
| --- | --- |
| Elastomer | 15 |
| Natural resin | 19 |
| Synthetic resin | 20 |
| Fat/wax/emulsifiers | 27 |
| Fillers | 19 |

It should be emphasized that several other gum base compositions may be applied within the scope of the invention.

The elastomer and filler are added to a mixing kettle provided with mixing means like e.g. horizontally placed Z-shaped arms. The kettle has been preheated for 15 minutes to a temperature of about 120 °C. The rubber is broken into small pieces and softened with mechanical action in the kettle. The resin is slowly added to the elastomer until the mixture becomes homogeneous. The remaining resin is then added to the kettle and mixed for 10-20 minutes. The elastomer together with the softening ingredients are added and mixed for 20-40 minutes until the whole mixture becomes homogeneous.

The mixture is then discharged into the pan and allowed to cool to room temperature from the discharged temperature of 120 °C

## EXAMPLE 2

### Preparation of chewing gum

Chewing gum is prepared by use of the gum base in example 1. The chewing gum is prepared in accordance with the present invention to include a premixed flavor emulsion. The flavor emulsion is prepared from flavor, emulsifier and water. Further ingredients in the chewing gum of the present example are sorbitol, maltitolsyrup, aspartame, and acesulfame.

The chewing gum products are prepared as follows:

Flavor, emulsifier and water are mixed in a high-speed mixer to prepare a flavor emulsion.

The gum base is added to a mixing kettle provided with mixing means like e.g. horizontally placed Z-shaped arms. The kettle has been preheated for 15 minutes to a temperature of about 40-60°C or the chewing gum is made in one step, immediately after preparation of gum base in the same mixer where the gum base and kettle was cooled down to a temperature of about 40-60°C.

One half portion of the sorbitol is added together with the gum base and mixed for 3 minutes. Maltitolsyrup is added to the kettle and mixed for 1 minute. The remaining half portion of sorbitol is added and mixed for 1 minute. Then flavor emulsion is added to the kettle and mixed for 3 minutes. Then aspartame and acesulfame are added and mixed for 3 minutes. The resulting gum mixture is then discharged and e.g. transferred to a pan at a temperature of 40-48 °C. The gum is then rolled and scored into cores, sticks, balls, cubes, and any other desired shape, optionally followed by coating and polishing processes prior to packaging.

Evidently, within the scope of the invention, other processes and ingredients may be applied in the process of manufacturing the chewing gum. Variations of different ingredients are listed and explained in the above detailed description.

**Different gum base contents**

Chewing gum is prepared by use of the gum base in example 1 and according to the above-described procedure. Different levels of gum base content are evaluated when applying a fixed level of emulsion system. The varied formulations appear from table 1:

| Chewing gum formulation / Ingredients | 101 (comparative) | 102 (comparative) | 103 (comparative) | 104 | 105 |
|---|---|---|---|---|---|
| Gum base | 10 | 20 | 30 | 40 | 50 |
| Sorbitol | 78.29 | 68.29 | 58.29 | 48.29 | 38.29 |
| Maltitolsyrup | 5 | 5 | 5 | 5 | 5 |
| Aspartame | 0.18 | 0.18 | 0.18 | 0.18 | 0.18 |
| Acesulfame | 0.18 | 0.18 | 0.18 | 0.18 | 0.18 |
| Flavor | 3 | 3 | 3 | 3 | 3 |
| Emulsifier | 0.35 | 0.35 | 0.35 | 0.35 | 0.35 |
| Water | 3 | 3 | 3 | 3 | 3 |

Table 1: Chewing gum formulations comprising flavor emulsion and having different contents of gum base. The emulsifier applied is sucrose ester with HLB 11.

The formulations of table 1 are subjected to sensory evaluations, and the judges make the following conclusions:

Chewing gums prepared with 10 percent gum base are extremely soft. The chewing gums fall apart and dissolve completely within a few minutes of chewing.
Chewing gums prepared with 20 percent gum base are very quickly getting a soft texture and after few minutes of chewing they have a tendency to fall apart and then dissolve.
Chewing gums prepared with 30 percent gum base initially have an acceptable texture, which is quickly softening up nicely. They do not fall apart but after 5-7 minutes it is noted that they are starting to dissolve and have an unacceptable texture, which is too soft.
Chewing gums prepared with 40 percent gum base soften up quickly and the texture keeps softness and has a nice big volume. It is noted that the texture is substantially unchanged during a chewing period of 10 minutes. No falling apart or dissolving is experienced.
Chewing gums prepared with 50 percent gum base softens up within the first few minutes. The texture is being a little less soft than in the 40 percent case. No falling apart or dissolving is experienced.

**Basic formulation of chewing gum**

The gum base content of 40 percent is chosen for the following examples. Thus the chewing gum formulations are prepared with the following basic formulation:

| Ingredients | Percent by weight |
|---|---|
| Gum base | 40 |

(continued)

| Ingredients | Percent by weight |
|---|---|
| Sorbitol | 48.29 |
| Maltitolsyrup | 5 |
| Aspartame | 0.18 |
| Acesulfame | 0.18 |
| Flavor | 3 |
| Emulsifier | 0.35 |
| Water | 3 |

Peppermint oil is in the present examples selected as the flavor ingredient.

## EXAMPLE 3

### Different HLB

Six different chewing gum batches were prepared using the basic formulation of example 2 according to the procedure described in example 2, which implies a separate mixing of emulsifier, water and flavor. Different emulsifiers are applied according to table 2:

Table 2 - Chewing gum containing different emulsifiers having different total HLB values. The std. batch is a standard chewing gum provided for comparison. The emulsifier and water content according to the basic formulation of example 2 is zero in the std. chewing gum, and the sorbitol content is correspondingly increased to 51.64 percent by weight.

| Chewing gum batch | Emulsifier type | HLB |
|---|---|---|
| Std. (comparative) | - | - |
| 301 (comparative) | Lecithin | 3 |
| 302 (comparative) | Mono-diglycerid | 4 |
| 303 (comparative) | Polyglycerolester | 7 |
| 304 | Sucrose stearate | 11 |
| 305 | Polysorbate 60 | 15 |
| 306 | Polysorbate 80 | 15 |

Evidently there is a difference between the preparation procedure of example 2 and the preparation procedure of std. chewing gum as the std. chewing gum does not involve a flavor emulsion. Thus in std. chewing gum flavor alone is added instead of flavor emulsion.

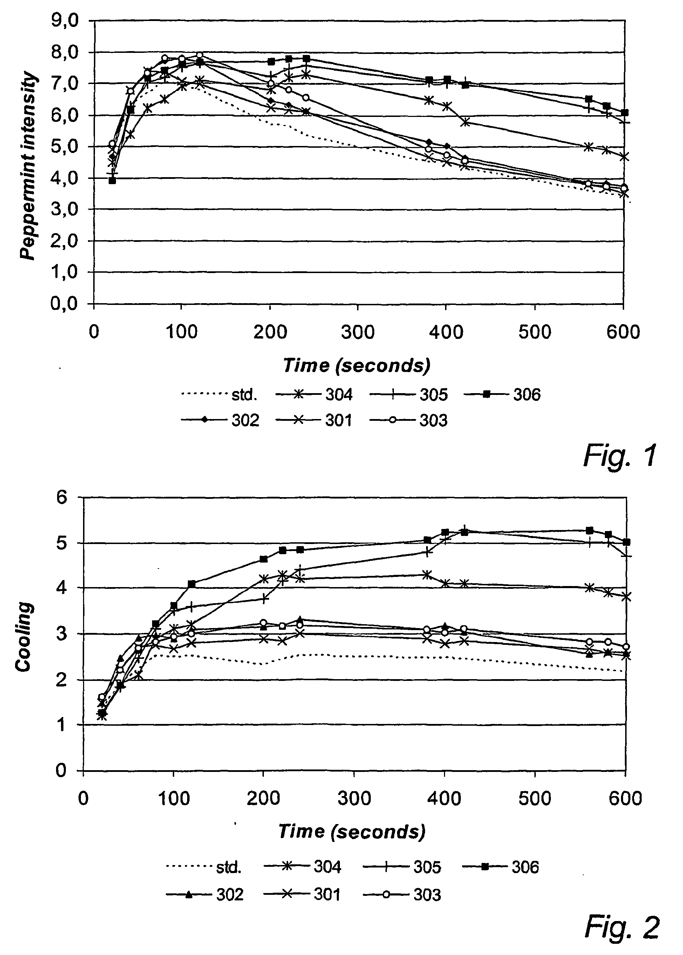

A taste panel evaluates the chewing gum formulations of table 2. Results hereof are shown in figures 1 and 2.

Comments on the figures 1 and 2:

Chewing gums including flavor emulsions by emulsifiers having HLB 3, 4 and 7 show a very slight improvement over standard with regard to both peppermint flavor intensity and cooling. A significant improvement is however appearing for the chewing gums applying a flavor emulsion comprising an emulsifier having HLB 11. Furthermore a significant improvement is appearing for the chewing gums applying a flavor emulsion comprising emulsifiers of HLB 15 both with respect to standard and HLB 11-chewing gum.

It is noted with regard to peppermint that the difference between standard and low-HLB-chewing gum (no. std., 301, 302, 303) and chewing gum containing flavor emulsions of high HLB (no. 304, 305, 306) is in the present example enlarged during the chewing period. This is a result of the standard chewing gum and low-HLB chewing gum loosing its taste and the high-HLB chewing gum keeping the flavor intensity, which may be interpreted to be due to the high HLB-emulsifier's ability to mobilize the liposoluble flavoring from the gum base.

It is noted with regard to cooling that the level of cooling is higher in the high-HLB containing chewing gum (no. 304, 305, 306) through the chewing period after the first hundred seconds both compared to low-HLB containing chewing gum (no. 301, 302, 303) and standard chewing gum. After 100 seconds and in the remaining chewing period it is observed that cooling is significantly higher for the chewing gums containing emulsifier having higher HLB values compared to the chewing gums containing emulsifier having lower HLB values.

## EXAMPLE 4

### Different emulsifier concentrations

Based on the chewing gum basic formulation of example 2 four different chewing gum batches are prepared having changed emulsifier contents according to table 3. Preparation is performed in accordance with the procedure of example 2, which implies that emulsifiers is incorporated into the chewing gum via an emulsion system comprising flavor. As regards std. chewing gum, flavor alone is added instead of flavor emulsion

| Chewing gum formulation / Ingredients | Std. (comparative) | 401 | 402 | 403 | 404 |
|---|---|---|---|---|---|
| Gum base | 40 | 40 | 40 | 40 | 40 |
| Sorbitol | 51.64 | 48.54 | 48.14 | 47.64 | 47.14 |
| Maltitolsyrup | 5 | 5 | 5 | 5 | 5 |
| Aspartame | 0.18 | 0.18 | 0.18 | 0.18 | 0.18 |
| Acesulfame | 0.18 | 0.18 | 0.18 | 0.18 | 0.18 |
| Flavor | 3 | 3 | 3 | 3 | 3 |
| Emulsifier | 0 | 0.1 | 0.5 | 1 | 1.5 |
| Water | 0 | 3 | 3 | 3 | 3 |

Table 3 – Chewing gum formulations with different contents of emulsifier. The content of sorbitol is changed correspondingly. Amounts are given in percent by weight of the chewing gum. The emulsifier in formulations 401, 402, 403 and 404 is sucrose stearate having a HLB value of 15.

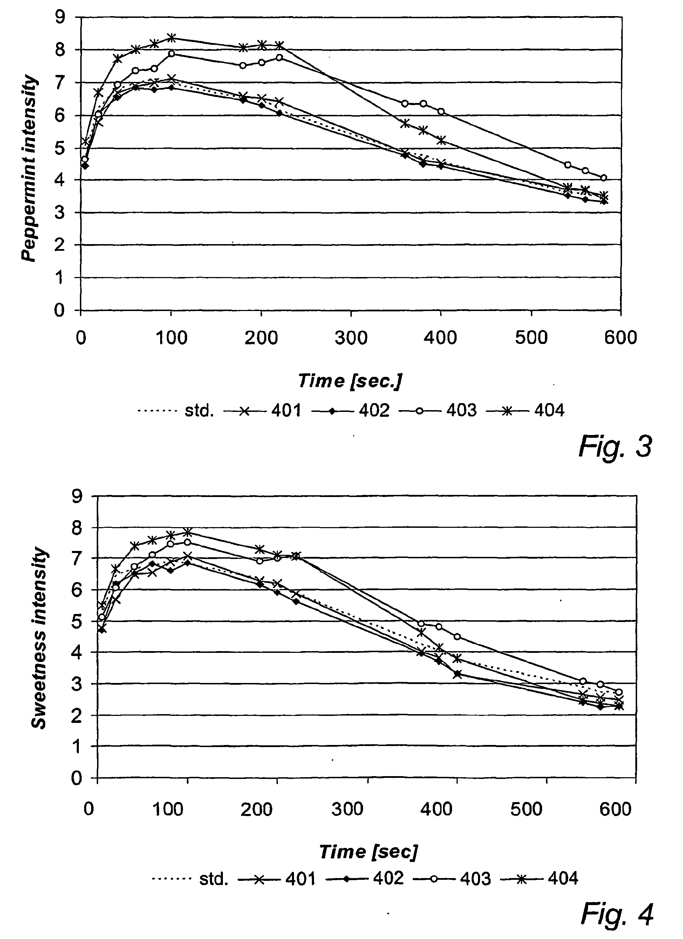

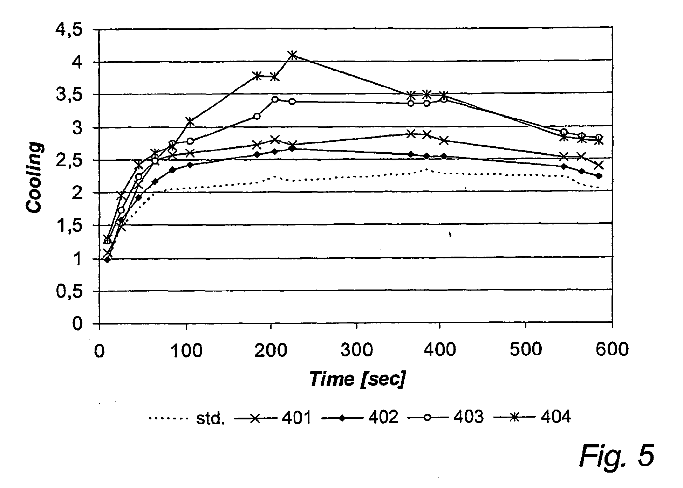

A taste panel evaluates the chewing gum formulations of table 3. Results hereof are shown in figures 3, 4 and 5.
Comntents on the figures 3, 4 and 5:

It is observed that an increase in emulsifier concentration results in significantly increased peppermint and sweetness intensity and a higher level of cooling. The conclusion is an overall improved sensory profile.

## EXAMPLE 5

### Premix and emulsion prefix

On the basis of the chewing gum basic formulation of example 2, two different chewing gum batches are prepared by use of premix (formulation no. 501) and emulsion premix (formulation no. 502), respectively. See table 4:

| Chewing gum formulation / Ingredients | Std. (Comparative) | 501 (Comparative) | 502 |
|---|---|---|---|
| Gum base | 40 | 40 | 40 |
| Sorbitol | 51.64 | 51.29 | 48.29 |
| Maltitolsyrup | 5 | 5 | 5 |
| Aspartame | 0.18 | 0.18 | 0.18 |

| | | | |
|---|---|---|---|
| Acesulfame | 0.18 | 0.18 | 0.18 |
| Flavor | 3 | 3 | 3 |
| Emulsifier | 0 | 0.35 | 0.35 |
| Water | 0 | 0 | 3 |

Table 4 – Chewing gum formulations for standard chewing gum (std.), chewing gum (501) with premixed flavor and chewing gum (502) with premixed flavor emulsion. The content of sorbitol is changed correspondingly. Amounts are given in percent by weight of the chewing gum. The emulsifier in formulations 501, 502 is sucrose stearate having a HLB value of 15.

The chewing gum products of table 4 are prepared according to the procedure of example 2. The only differences are that in preparing the chewing gum no. 501 flavor and emulsifier are premixed alone and added instead of flavor emulsion, and in the std. chewing gum, flavor alone is added instead of flavor emulsion.

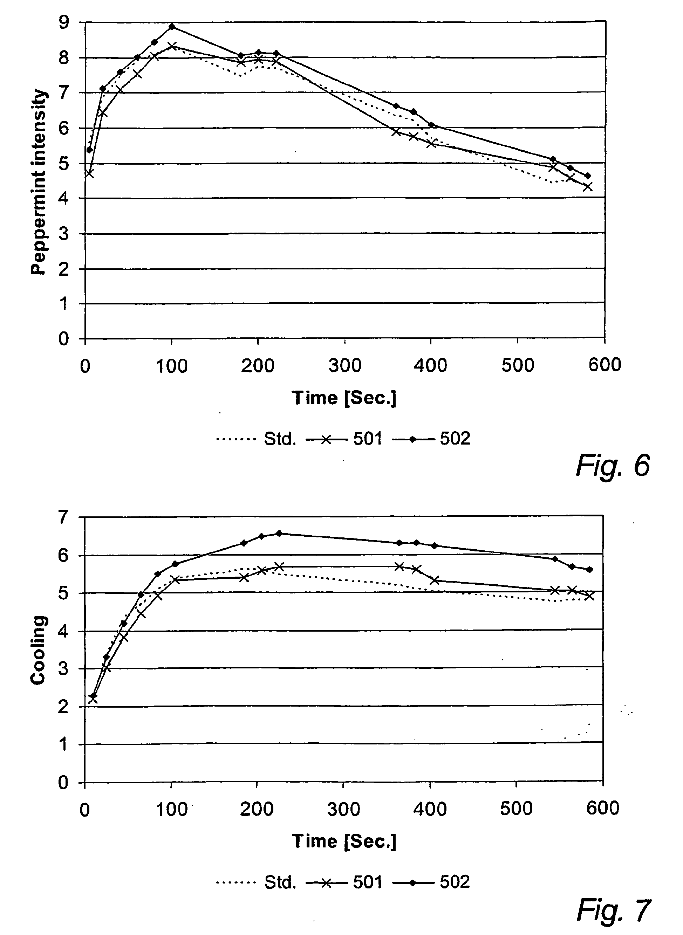

A taste panel evaluates the chewing gum formulations of table 4. Results hereof are shown in figures 6 and 7.

Comments on the figures 6 and 7:

In the present experiment the evaluation shows that chewing gum (no. 502) comprising a premixed flavor emulsion provides significantly higher cooling than both standard chewing gum (std.) and chewing gum (no. 501) comprising a premix of flavor and emulsifiers alone. Correspondingly an improved peppermint release is observed for chewing gum (no. 502), to which flavor has been added via a flavor emulsion.

**Claims**

1. A Chewing gum comprising a chewing gum base and at least one emulsion system mixed with said gum base, said emulsion system comprising at least one flavor, at least one dispersion medium and at least one emulsifier having a total HLB value of at least 10,
   wherein said at least one emulsifier comprises in the range of 0.1 to 10 percent by weight of said chewing gum and wherein said dispersion medium comprises in the range of 30 - 70 percent by weight of the emulsion system and wherein said chewing gum comprises at least 35 percent by weight of gum base.

2. Chewing gum according to claim 1, wherein said at least one emulsifier has a total HLB value within the range of 10 to 20.

3. Chewing gum according to claim 1 or 2, wherein said at least one emulsifier has a HLB value in the range of 12 to 20, preferably in the range of 14 to 20.

4. Chewing gum according to any of the claims 1-3, wherein said at least one emulsifier amounts to at most 10 % by weight, preferably at most 5 % by weight of said chewing gum.

5. Chewing gum according to any of the claims 1-4, wherein said at least one emulsifier amounts to at least 0.3 % by weight, preferably at least 0.5 % by weight, more preferably at least 0.7 % by weight of said chewing gum.

6. Chewing gum according to any of the claims 1-5 wherein said at least one emulsifier amounts to at least 1.4 % by weight of said chewing gum.

7. Chewing gum according to any of the claims 1-6 wherein said at least one emulsifier comprises in the range of 0.1 to 5.0 % by weight, preferably 0.1 to 2.5 % by weight and most preferably 0.1 to 1.5 % by weight of said chewing gum.

8. Chewing gum according to any of the claims 1-7, wherein said emulsifier comprises in the range of 1 to 60 % by weight, preferably 2 to 60 % by weight, more preferably 3 to 60 % by weight, even more preferably 4 to 60 % by weight, and most preferably 5 to 50 % by weight of the emulsion system.

9. Chewing gum according to any of the claims 1-8, wherein said emulsion system further comprises active agents.

10. Chewing gum according to any of the claims 1-9, wherein said at least one emulsifier is selected from the group of sucrose esters, polysorbates, polyglycerol esters, citric acid esters, sodium stearoyllactylate, sodium lauryl sulfate, polyoxyethylated hydrogenated castor oil, and polyoxyethylene stearic acid ester.

11. Chewing gum according to any of the claims 1-10, wherein said dispersion medium is selected from the group of water, ethanol, alkyl polyols, glycerol, sorbitol, and propylene glycol and combinations thereof.

12. Chewing gum according to any of the claims 1-11, wherein said chewing gum comprises dispersion medium in the range of 0.1 to 40 percent by weight, preferably in the range of 0.5 to 20 percent by weight, more preferably in the range of 1 to 15 percent by weight, even more preferably in the range of 1.5 to 10 percent by weight, and most preferably in the range of 2 to 8 percent by weight of the chewing gum.

13. Chewing gum according to any of the claims 1-12, wherein said dispersion medium comprises at most 20% by weight, preferably at most 15 % by weight, more preferably at most 10 % by weight, and most preferably at most 5 % by weight of the chewing gum.

14. Chewing gum according to any of the claims 1-13, wherein said dispersion medium comprises in range the of 40 - 60 % by weight of the emulsion system.

15. Chewing gum according to any of the claims 1-14, wherein said dispersion medium contains water in a quantity of at least 0.5 percent by weight, preferably at least 2 percent by weight, more preferably at least 5 percent by weight and most preferably at least 10 percent by weight of the dispersion medium.

16. Chewing gum according to any of the claims 1-15, wherein said dispersion medium is water in a quantity in the range of 0.1 to 10 percent by weight, preferably in the range of 0.5 to 8 percent by weight, and most preferably in the range of 1 to 6 percent by weight of the chewing gum.

17. Chewing gum according to any of the claims 1-16, wherein said flavor comprises 0.01 to 10 % by weight, preferably 0.1 to 5 % by weight of said chewing gum.

18. Chewing gum according to any of the claims 1-17, wherein said emulsion system comprises at least one substantially oil-based flavor.

19. Chewing gum according to any of the claims 1-18, wherein said flavor is selected from the group of peppermint, spearmint, strawberry, cherry, lemon, orange, wintergreen, anise, cola, cinnamon, banana, blackberry, blue berry, eucalyptus, menthol, and combinations thereof.

20. Chewing gum according to any of the claims 1-19, wherein said flavor is a natural or synthetic flavoring oil.

21. Chewing gum according to any of the claims 1-20, wherein said flavor is liposoluble.

22. Chewing gum according to any of the claims 1-21, wherein said flavor comprises oil-based peppermint or spearmint flavor.

23. Chewing gum according to any of the claims 1-22, wherein said flavor is a fruit flavor.

24. Chewing gum according to any of the claims 1-23, wherein said flavor comprises in the range of 10 -60% by weight, preferably in the range of 20 -60% by weight, more preferably in the range of 30 -60 percent by weight, and most preferably in the range of 40 - 60 % by weight of the emulsion system.

25. Chewing gum according to any of the claims 1-24, wherein said emulsion system comprises in the range of 1 to 20 %, preferably in the range of 1 to 10 % by weight of said chewing gum.

26. Chewing gum according to any of the claims 1-25, wherein said chewing gum comprises at least two different emulsion systems comprising different flavors.

27. Chewing gum according to any of the claims 1-26, wherein said emulsion system comprises at least two flavors.

28. Chewing gum according to any of the claims 1-27, wherein said emulsion system comprises dispersed droplets having diameters in the range of 0 to 10 $\mu$m, preferably 0 to 5 $\mu$m, more preferably 0 to 3 $\mu$m, even more preferably 0 to 2 $\mu$m, and most preferably 0 to 1 $\mu$m.

29. Chewing gum according to any of the claims 1-28, wherein said emulsion system is stable for at least five hours, preferably at least one day, more preferably at least one week and most preferably at least several months.

30. Chewing gum according to any of the claims 1-29, wherein said emulsion system is stable when mixed into the chewing gum.

31. Chewing gum according to any of the claims 1-30, wherein said chewing gum comprises sweetener in an amount in range of 1 to 95% by weight of the chewing gum.

32. Chewing gum according to any of the claims 1-31, wherein said chewing gum comprises at least one sweetener selected from the group of bulk sweeteners and high intensity sweeteners.

33. Chewing gum according to any of the claims 1-32, wherein said emulsion system comprises sweetener.

34. Chewing gum according to any of the claims 1-33, wherein said gum base comprises ingredients including at least one elastomer and at least one elastomer plasticizer.

35. Chewing gum according to any of the claims 1-34, wherein said gum base comprises at least one ingredient selected from the group of natural resins, synthetic resins, natural elastomers, synthetic elastomers, fats, waxes, emulsifiers, fillers, colors and antioxidants.

36. Chewing gum according to any of the claims 1-35, wherein said gum base comprises at least two components selected from the group of natural or synthetic elastomers, natural or synthetic resins, plasticizers, fats, waxes, emulsifiers, colors, antioxidants and fillers.

37. Chewing gum according to any of the claims 1-36, wherein said chewing gum is coated with an outer coating selected from the group of hard coatings, soft coatings and film coatings.

38. Chewing gum according to any of the claims 1-37, wherein said chewing gum comprises chewing gum ingredients including gum base, bulk sweeteners and flavors.

39. Chewing gum according to any of the claims 1-38, wherein said chewing gum comprises at least one chewing gum ingredient selected from the group of gum base, bulk sweeteners, flavoring agents, softeners, coloring agents, active ingredients, high intensity sweeteners, and fillers.

40. Method of manufacturing chewing gum according to any of the claims 1-39, whereby said emulsion system is mixed separately and added to the chewing gum during a procedure of mixing the chewing gum ingredients.

**Patentansprüche**

1. Kaugummi, umfassend eine Kaugummigrundlage und mindestens ein Emulsionssystem, das mit der Gummigrundlage vermischt ist, wobei das Emulsionssystem mindestens einen Geschmack- oder Aromastoff, mindestens ein Dispersionsmedium und mindestens ein Emulgiermittel mit einem Gesamt-HLB-Wert von mindestens 10 umfasst, wobei das mindestens eine Emulgiermittel 0,1 bis 10 Gew.-% des Kaugummis ausmacht und wobei das Dispersionsmedium 30 bis 70 Gew.-% des Emulsionssystems ausmacht
und wobei der Kaugummi mindestens 35 Gew.% Gummigrundlage umfasst.

2. Kaugummi nach Anspruch 1, wobei das mindestens eine Emulgiermittel einen Gesamt-HLB-Wert innerhalb des Bereichs von 10 bis 20 aufweist.

3. Kaugummi nach Anspruch 1 oder 2, wobei das mindestens eine Emulgiermittel einen HLB-Wert im Bereich von 12 bis 20, vorzugsweise im Bereich von 14 bis 20 aufweist.

4. Kaugummi nach einem der Ansprüche 1-3, wobei das mindestens eine Emulgiermittel höchstens 10 Gew.-%, vorzugsweise höchstens 5 Gew.-% des Kaugummis ausmacht.

5. Kaugummi nach einem der Ansprüche 1-4, wobei das mindestens eine Emulgiermittel mindestens 0,3 Gew.-%, vorzugsweise mindestens 0,5 Gew.-%, mehr bevorzugt mindestens 0,7 Gew.-% des Kaugummis ausmacht.

6. Kaugummi nach einem der Ansprüche 1-5, wobei das mindestens eine Emulgiermittel mindestens 1,4 Gew.-% des Kaugummis ausmacht.

7. Kaugummi nach einem der Ansprüche 1-6, wobei das mindestens eine Emulgiermittel 0,1 bis 5,0 Gew.-%, vorzugsweise 0,1 bis 2,5 Gew.-% und am meisten bevorzugt 0,1 bis 1,5 Gew-% des Kaugummis ausmacht.

8. Kaugummi nach einem der Ansprüche 1-7, wobei das Emulgiermittel 1 bis 60 Gew.-%, vorzugsweise 2 bis 60 Gew.-%, mehr bevorzugt 3 bis 60 Gew.-%, sogar noch mehr bevorzugt 4 bis 60 Gew.% und am meisten bevorzugt 5 bis 50 Gew.-% des Emulsionssystems ausmacht.

9. Kaugummi nach einem der Ansprüche 1-8, wobei das Emulsionssystem des Weiteren Wirkstoffe umfasst.

10. Kaugummi nach einem der Ansprüche 1-9, wobei das mindestens eine Emulgiermittel aus der Gruppe von Sucroseestern, Polysorbaten, Polyglycerolestern, Citronensäureestern, Natriumstearoyllactylat, Natriumlaurylsulfat, polyoxyethyliertem hydriertem Rizinusöl und Polyoxyethylenstearinsäureester ausgewählt ist.

11. Kaugummi nach einem der Ansprüche 1-10, wobei das Dispersionsmedium aus der Gruppe von Wasser, Ethanol, Alkylpolyolen, Glycerol, Sorbitol und Propylenglycol und Kombinationen davon ausgewählt ist

12. Kaugummi nach einem der Ansprüche 1-11, wobei der Kaugummi Dispersionsmedium im Bereich von 0,1 bis 40 Gew.-%, vorzugsweise im Bereich von 0,5 bis 20 Gew.-%, mehr bevorzugt im Bereich von 1 bis 15 Gew.-%, sogar noch mehr bevorzugt im Bereich von 1,5 bis 10 Gew.-% und am meisten bevorzugt im Bereich von 2 bis 8 Gew.-% des Kaugummis umfasst.

13. Kaugummi nach einem der Ansprüche 1-12, wobei das Dispersionsmedium höchstens 20 Gew.-%, vorzugsweise höchstens 15 Gew.-%, mehr bevorzugt höchstens 10 Gew.-% und am meisten bevorzugt höchstens 5 Gew.-% des Kaugummis ausmacht.

14. Kaugummi nach einem der Ansprüche 1-13, wobei das Dispersionsmedium 40 bis 60 Gew.-% des Emulsionssystems ausmacht.

15. Kaugummi nach einem der Ansprüche 1-14, wobei das Dispersionsmedium Wasser in einer Menge von mindestens 0,5 Gew.-%, vorzugsweise mindestens 2 Gew.-%, mehr bevorzugt mindestens 5 Gew.-% und am meisten bevorzugt mindestens 10 Gew.-% des Dispersionsmediums enthält.

16. Kaugummi nach einem der Ansprüche 1-15, wobei das Dispersionsmedium Wasser in einer Menge im Bereich von 0,1 bis 10 Gew.-%, vorzugsweise im Bereich von 0,5 bis 8 Gew.-% und am meisten bevorzugt im Bereich von 1 bis 6 Gew.-% des Kaugummis ist.

17. Kaugummi nach einem der Ansprüche 1-16, wobei der Geschmack- oder Aromastoff 0,01 bis 10 Gew.-%, vorzugsweise 0,1 bis 5 Gew.-% des Kaugummis ausmacht.

18. Kaugummi nach einem der Ansprüche 1-17, wobei das Emulsionssystem mindestens einen im Wesentlichen auf Öl basierenden Geschmack- oder Aromastoff umfasst.

19. Kaugummi nach einem der Ansprüche 1-18, wobei der Geschmack- oder Aromastoff aus der Gruppe von Pfefferminze, Krauseminze, Erdbeere, Kirsche, Zitrone, Orange, Wintergrün, Anis, Cola, Zimt, Banane, Brombeere, Blaubeere, Eukalyptus, Menthol und Kombinationen davon ausgewählt ist.

20. Kaugummi nach einem der Ansprüche 1-19, wobei der Geschmack- oder Aromastoff ein natürliches oder synthetisches aromatisierendes Öl ist.

21. Kaugummi nach einem der Ansprüche 1-20, wobei der Geschmack- oder Aromastoff fettlöslich ist.

22. Kaugummi nach einem der Ansprüche 1-21, wobei der Geschmack- oder Aromastoff auf Öl basierendes Pfefferminz- oder Krauseminzaroma umfasst.

23. Kaugummi nach einem der Ansprüche 1-22, wobei der Geschmack- oder Aromastoff ein Fruchtaroma ist.

24. Kaugummi nach einem der Ansprüche 1-23, wobei der Geschmack- oder Aromastoff 10 bis 60 Gew.-%, vorzugsweise 20 bis 60 Gew.-%, mehr bevorzugt 30 bis 60 Gew.-% und am meisten bevorzugt 40 bis 60 Gew.-% des Emulsionssystems ausmacht.

25. Kaugummi nach einem der Ansprüche 1-24, wobei das Emulsionssystem 1 bis 20 Gew.-%, vorzugsweise 1 bis 10 Gew.-% des Kaugummis ausmacht.

26. Kaugummi nach einem der Ansprüche 1-25, wobei der Kaugummi mindestens zwei unterschiedliche Emulsionssysteme, welche unterschiedliche Geschmack- oder Aromastoffe umfassen, umfasst.

27. Kaugummi nach einem der Ansprüche 1-26, wobei das Emulsionssystem mindestens zwei Geschmack- oder Aromastoffe umfasst.

28. Kaugummi nach einem der Ansprüche 1-27, wobei das Emulsionssystem dispergierte Tröpfchen mit Durchmessern im Bereich von 0 bis 10 $\mu$m, vorzugsweise 0 bis 5 $\mu$m, mehr bevorzugt 0 bis 3 $\mu$m, sogar noch mehr bevorzugt 0 bis 2 $\mu$m und am meisten bevorzugt 0 bis 1 $\mu$m umfasst.

29. Kaugummi nach einem der Ansprüche 1-28, wobei das Emulsionssystem für mindestens fünf Stunden, vorzugsweise mindestens einen Tag, mehr bevorzugt mindestens eine Woche und am meisten bevorzugt mindestens mehrere Monate stabil ist

30. Kaugummi nach einem der Ansprüche 1-29, wobei das Emulsionssystem stabil ist, wenn es in den Kaugummi eingemischt wird.

31. Kaugummi nach einem der Ansprüche 1-30, wobei der Kaugummi Süßungsmittel in einer Menge im Bereich von 1 bis 95 Gew.-% des Kaugummis umfasst.

32. Kaugummi nach einem der Ansprüche 1-31, wobei der Kaugummi mindestens ein Süßungsmittel, welches aus der Gruppe von Bulk- oder Masse-Süßungsmitteln und hochintensiven Süßungsmitteln ausgewählt ist, umfasst.

33. Kaugummi nach einem der Ansprüche 1-32, wobei das Emulsionssystem Süßungsmittel umfasst.

34. Kaugummi nach einem der Ansprüche 1-33, wobei die Gummigrundlage Inhaltsstoffe, welche mindestens ein Elastomer und mindestens einen Elastomer-Weichmacher umfassen, umfasst.

35. Kaugummi nach einem der Ansprüche 1-3A, wobei die Gummigrundlage mindestens einen Inhaltsstoff, welcher aus der Gruppe von natürlichen Harzen, Kunstharzen, natürlichen Elastomeren, synthetischen Elastomeren, Fetten, Wachsen, Emulgiermitteln, Füllstoffen, Farbstoffen und Antioxidationsmitteln ausgewählt ist, umfasst.

36. Kaugummi nach einem der Ansprüche 1-35, wobei die Gummigrundlage mindestens zwei Komponenten, welche aus der Gruppe von natürlichen oder synthetischen Elastomeren, natürlichen Harzen oder Kunstharzen, Weichmachern, Fetten, Wachsen, Emulgiermitteln, Farbstoffen, Antioxidationsmitteln und Füllstoffen ausgewählt sind, umfasst.

37. Kaugummi nach einem der Ansprüche 1-36, wobei der Kaugummi mit einem äußeren Überzug, welcher aus der Gruppe von harten Überzügen, weichen Überzügen und Filmüberzügen ausgewählt ist, überzogen ist.

38. Kaugummi nach einem der Ansprüche 1-37, wobei der Kaugummi Kaugummi-Inhaltsstoffe, umfassend Gummigrundlage, Bulk- oder Masse-Süßungsmittel und Geschmack- oder Aromastoffe, umfasst.

39. Kaugummi nach einem der Ansprüche 1-38, wobei der Kaugummi mindestens einen Kaugummi-Inhaltsstoff, welcher aus der Gruppe von Gummigrundlage, Bulk-oder Masse-Süßungsmitteln, Geschmack- oder Aromastoffen, Weichmachern, Färbemitteln, Wirkstoffen, hochintensiven Süßungsmitteln und Füllstoffen ausgewählt ist, umfasst.

40. Verfahren zur Herstellung von Kaugummi nach einem der Ansprüche 1-39, wobei das Emulsionssystem getrennt gemischt und zu dem Kaugummi während eines Vorgangs eines Mischens der Kaugummi-Inhaltsstoffe hinzu gegeben wird.

## Revendications

1. Gomme à mâcher comprenant une base de gomme à mâcher et au moins un système d'émulsion mélangé à ladite base de gomme, ledit système d'émulsion comprenant au moins un arôme, au moins un milieu de dispersion et au moins un émulsifiant ayant une valeur HLB totale d'au moins 10,
dans laquelle ledit au moins un émulsifiant comprend de l'ordre de 0,1 à 10 % en poids de ladite gomme à mâcher et dans laquelle ledit milieu de dispersion comprend de l'ordre de 30 à 70 % en poids du système d'émulsion, et dans laquelle ladite gomme à mâcher comprend au moins 35 % en poids de la base de gomme.

2. Gomme à mâcher selon la revendication 1, dans laquelle ledit au moins un émulsifiant a une valeur HLB totale de l'ordre de 10 à 20.

3. Gomme à mâcher selon la revendication 1 ou 2, dans laquelle au moins ledit émulsifiant a une valeur HLB de l'ordre de 12 à 20, de préférence de l'ordre de 14 à à 20.

4. Gomme à mâcher selon l'une quelconque des revendications 1 à 3, dans laquelle au moins ledit émulsifiant constitue au plus 10 % en poids, de préférence au plus 5 % en poids de ladite gomme à mâcher.

5. Gomme à mâcher selon l'une quelconque des revendications 1 à 4, dans laquelle au moins un émulsifiant constitue au moins 0,3 % en poids, de préférence au moins 0,5 % en poids, de manière davantage préférée, au moins 0,7 % en poids de ladite gomme à mâcher.

6. Gomme à mâcher selon l'une quelconque des revendications 1 à 5, dans laquelle au moins un émulsifiant constitue au moins 1,4 % en poids de ladite gomme à mâcher.

7. Gomme à mâcher selon l'une quelconque des revendications 1 à 6, dans laquelle au moins un émulsifiant comprend de l'ordre de 0,1 à 5,0 % en poids, de préférence de 0,1 à 2,5 % en poids et de manière préférée entre toutes, de 0,1 à 1,5 % en poids de ladite gomme à mâcher.

8. Gomme à mâcher selon l'une quelconque des revendications 1 à 7, dans laquelle ledit émulsifiant comprend de l'ordre de 1 à 60 % en poids, de préférence de 2 à 60 % en poids, de manière davantage préférée, de 3 à 60 % en poids, de manière encore davantage préférée, de 4 à 60 % en poids et de manière préférée entre toutes, de 5 à 50 % en poids du système d'émulsion.

9. Gomme à mâcher selon l'une quelconque des revendications 1 à 8, dans laquelle ledit système d'émulsion comprend en outre des agents actifs.

**10.** Gomme à mâcher selon l'une quelconque des revendications 1 à 9, dans laquelle au moins ledit émulsifiant est choisi dans le groupe constitué des esters de saccharose, des polysorbates, des esters de polyglycérol, des esters d'acide citrique, du stéaroyllactylate de sodium, du laurylsulfate de sodium, de l'huile de ricin hydrogénée polyéthylée et de l'ester d'acide polyoxyéthylène stéarique.

**11.** Gomme à mâcher selon l'une quelconque des revendications 1 à 10, dans laquelle ledit milieu de dispersion est choisi dans le groupe constitué de l'eau, l'éthanol, les alkylpolyols, le glycérol, le sorbitol et le propylène glycol et leurs combinaisons.

**12.** Gomme à mâcher selon l'une quelconque des revendications 1 à 11, ladite gomme à mâcher comprenant un milieu de dispersion de l'ordre de 0,1 à 40 % en poids, de préférence de l'ordre de 0,5 à 20 % en poids, de manière davantage préférée, de l'ordre de 1 à 15 % en poids, de manière encore davantage préférée, de l'ordre de 1,5 à 10 % en poids et de manière préférée entre toutes, de l'ordre de 2 à 8 % en poids de la gomme à mâcher.

**13.** Gomme à mâcher selon l'une quelconque des revendications 1 à 12, dans laquelle ledit milieu de dispersion comprend au plus 20 % en poids, de préférence au plus 15 % en poids, de manière davantage préférée, au plus 10 % en poids et de manière préférée entre toutes, au plus 5 % en poids de la gomme à mâcher.

**14.** Gomme à mâcher selon l'une quelconque des revendications 1 à 13, dans laquelle ledit milieu de dispersion comprend de l'ordre de 40 à 60 % en poids du système d'émulsion.

**15.** Gomme à mâcher selon l'une quelconque des revendications 1 à 14, dans laquelle ledit milieu de dispersion contient de l'eau en une quantité d'au moins 0,5 % en poids, de préférence d'au moins 2 % en poids, de manière davantage préférée, d'au moins 5 % en poids et de manière préférée entre toutes, d'au moins 10 % en poids du milieu de dispersion.

**16.** Gomme à mâcher selon l'une quelconque des revendications 1 à 15, dans laquelle ledit milieu de dispersion est l'eau en une quantité de l'ordre de 0,1 à 10 % en poids, de préférence de l'ordre de 0,5 à 8 % en poids et de manière préférée entre toutes, de l'ordre de 1 à 6 % en poids de la gomme à mâcher.

**17.** Gomme à mâcher selon l'une quelconque des revendications 1 à 16, dans laquelle ledit arôme comprend 0,01 à 10 % en poids, de préférence de 0,1 à à % en poids de ladite gomme à mâcher.

**18.** Gomme à mâcher selon l'une quelconque des revendications 1 à 17, dans laquelle ledit système d'émulsion comprend au moins substantiellement un arôme à base huileuse.

**19.** Gomme à mâcher selon l'une quelconque des revendications 1 à 18, dans laquelle ledit arôme est choisi dans le groupe constitué de la menthe poivrée, la menthe verte, la fraise, la cerise, le citron, l'orange, le wintergreen, l'anis, le cola, la cannelle, la banane, la mûre, la myrtille, l'eucalyptus, le menthol et leurs combinaisons.

**20.** Gomme à mâcher selon l'une quelconque des revendications 1 à 19, dans laquelle ledit arôme est une huile aromatisant naturelle ou synthétique.

**21.** Gomme à mâcher selon l'une quelconque des revendications 1 à 20, dans laquelle l'arôme est liposoluble.

**22.** Gomme à mâcher selon l'une quelconque des revendications 1 à 21, dans laquelle ledit arôme comprend un arôme de menthe poivrée ou de menthe verte à base huileuse.

**23.** Gomme à mâcher selon l'une quelconque des revendications 1 à 22, dans laquelle ledit arôme est un arôme de fruit.

**24.** Gomme à mâcher selon l'une quelconque des revendications 1 à 23, dans laquelle ledit arôme comprend de l'ordre de 10 à 60 % en poids, de préférence de l'ordre de 20 à 60 % en poids, de manière davantage préférée, de l'ordre de 30 à 60 % en poids et de manière préférée entre toutes, de l'ordre de 40 à 60 % en poids du système d'émulsion.

**25.** Gomme à mâcher selon l'une quelconque des revendications 1 à 24, dans laquelle ledit système d'émulsion comprend de l'ordre de 1 à 20 %, de préférence de l'ordre de 1 à 10 % en poids de ladite gomme à mâcher.

**26.** Gomme à mâcher selon l'une quelconque des revendications 1 à 25, ladite gomme à mâcher comprenant au moins deux systèmes d'émulsion différents comprenant différents arômes.

**27.** Gomme à mâcher selon l'une quelconque des revendications 1 à 26, dans laquelle ledit système d'émulsion comprend au moins deux arômes.

**28.** Gomme à mâcher selon l'une quelconque des revendications 1 à 27, dans laquelle ledit système d'émulsion comprend des gouttelettes dispersées ayant des diamètres de l'ordre de 0 à 10 $\mu$m, de préférence de 0 à 5 $\mu$m, de manière davantage préférée, de 0 à 3 $\mu$m, de manière encore davantage préférée, de 0 à 2 $\mu$m et de manière préférée entre toutes, de 0 à 1 $\mu$m.

**29.** Gomme à mâcher selon l'une quelconque des revendications 1 à 28, dans laquelle ledit système d'émulsion est stable pendant au moins cinq heures, de préférence au moins un jour, de manière davantage préférée, au moins une semaine et de manière préférée entre toutes, au moins plusieurs mois.

**30.** Gomme à mâcher selon l'une quelconque des revendications 1 à 29, dans laquelle ledit système d'émulsion est stable lorsqu'il est mélangé dans la gomme à mâcher.

**31.** Gomme à mâcher selon l'une quelconque des revendications 1 à 30, ladite gomme à mâcher comprenant un édulcorant dans une plage de 1 à 95 % en poids de la gomme à mâcher.

**32.** Gomme à mâcher selon l'une quelconque des revendications 1 à 31, ladite gomme à mâcher comprenant au moins un édulcorant choisi dans le groupe constitué des édulcorants de masse et des édulcorants de haute intensité.

**33.** Gomme à mâcher selon l'une quelconque des revendications 1 à 32, dans laquelle ledit système d'émulsion comprend un édulcorant.

**34.** Gomme à mâcher selon l'une quelconque des revendications 1 à 33, dans laquelle ladite base de gomme comprend des ingrédients comprenant au moins un élastomère et au moins un plastifiant élastomère.

**35.** Gomme à mâcher selon l'une quelconque des revendications 1 à 34, dans laquelle la base de gomme comprend au moins un ingrédient choisi dans le groupe constitué des résines naturelles, des résines synthétiques, des élastomères naturels, des élastomères synthétiques, des graisses, des cires, des émulsifiants, des agents de charge, des colorants et des antioxydants.

**36.** Gomme à mâcher selon l'une quelconque des revendications 1 à 35, dans laquelle ladite base de gomme comprend au moins deux composants choisis dans le groupe constitué des élastomères naturels ou synthétiques, des résines naturelles ou synthétiques, des plastifiants, des graisses, des cires, des émulsifiants, des colorants, des antioxydants et des agents de charge.

**37.** Gomme à mâcher selon l'une quelconque des revendications 1 à 36, ladite gomme à mâcher étant revêtue d'un revêtement externe choisi dans le groupe constitué des revêtements durs, des revêtements souples et des revêtements en film.

**38.** Gomme à mâcher selon l'une quelconque des revendications 1 à 37, ladite gomme à mâcher comprenant des ingrédients de gomme à mâcher comprenant une base de gomme, des édulcorants de masse et des arômes.

**39.** Gomme à mâcher selon l'une quelconque des revendications 1 à 38, ladite gomme à mâcher comprenant au moins un ingrédient de gomme à mâcher choisi dans le groupe constitué d'une base de gomme, des édulcorants de masse, des agents aromatisants, des assouplissants, des agents colorants, des ingrédients actifs, des édulcorants de haute intensité et des agents de charge.

**40.** Procédé de fabrication d'une gomme à mâcher selon l'une quelconque des revendications 1 à 39, dans lequel ledit système d'émulsion est mélangé séparément et ajouté à la gomme à mâcher pendant un processus de mélange des ingrédients de la gomme à mâcher.

*Fig. 1*

*Fig. 2*

Fig. 3

Fig. 4

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1241949 A
- US 6444241 B
- WO 9909840 A
- US 2003124064 A
- US 2002051836 A
- WO 9222217 A
- EP 0407498 A
- EP 0252000 B1

**Non-patent literature cited in the description**

- **H. P. FIEDLER.** Lexikon der Hilfstoffe fur Pharmacie, Kosmetik und Angrenzende Gebiete. 1981, 63-64
- **MARTINDALE.** The Extra Pharmacopoeia. 547-578
- *J. Dent. Res.,* 1949, vol. 28 (2), 160-171
- **BARNEY H. HUNTER ; ROBERT L. TALBERT.** *Pharm. Int.,* November 1985, 267-271